# EUROPÄISCHE PATENTSCHRIFT

(11) **EP 3 370 908 B1**
(45) Veröffentlichungstag und Bekanntmachung des Hinweises auf die Patenterteilung: **11.12.2019**
(21) Anmeldenummer: 16785465.2
(22) Anmeldetag: 24.10.2016
(51) Int. Cl.: B23D 59/00, B27B 9/02

(54) **SCHNITTLÄNGENANZEIGEVORRICHTUNG**
CUTTING LENGTH DISPLAY DEVICE
DISPOSITIF INDICATEUR DE LONGUEUR DE COUPE

(30) Priorität: 04.11.2015 DE 102015221637
(43) Veröffentlichungstag der Anmeldung: 12.09.2018
(73) Patentinhaber: Robert Bosch GmbH, 70442 Stuttgart (DE)
(72) Erfinder: KUEHN, Thorsten, 70197 Stuttgart (DE); ZIEGLER, Thomas, 71711 Steinheim An Der Murr (DE); WALL, Michael, 70178 Stuttgart (DE); MAUTE, Joerg, 71069 Sindelfingen (DE)
(86) Internationale Anmeldenummer: PCT/EP2016/075486
(87) Internationale Veröffentlichungsnummer: WO 2017/076671

(56) Entgegenhaltungen:
- DE-A1-102012 219 397

## Beschreibung

### Stand der Technik

Aus der DE 10 2012 219 397 A1 ist bereits eine Schnittlängenanzeigevorrichtung für eine Werkzeugmaschine bekannt, die eine ein beweglich gelagertes Anzeigeelement umfassende Anzeigeeinheit zu einer Anzeige zumindest einer Position einer Schnittkante eines Bearbeitungswerkzeugs auf einem zu bearbeitenden Werkstück in Abhängigkeit einer eingestellten Schnitttiefe des Bearbeitungswerkzeugs aufweist.

### Offenbarung der Erfindung

Die Erfindung geht aus von einer Schnittlängenanzeigevorrichtung für eine insbesondere tragbare Werkzeugmaschine, mit zumindest einer Anzeigeeinheit, welche zumindest eine Lichtquelle aufweist und dazu vorgesehen ist, zumindest eine Position einer Schnittkante eines Bearbeitungswerkzeugs auf einem zu bearbeitenden Werkstück in Abhängigkeit einer eingestellten Schnitttiefe des Bearbeitungswerkzeugs mittels eines Lichtstrahls anzuzeigen.

Es wird vorgeschlagen, dass die Anzeigeeinheit eine Spiegeleinheit aufweist, welche dazu vorgesehen ist, den Lichtstrahl in Abhängigkeit der eingestellten Schnitttiefe des Bearbeitungswerkzeugs umzulenken.

Die Anzeigeeinheit ist insbesondere in zumindest einem Betriebszustand dazu vorgesehen, zu einer Anzeige der Position der Schnittkante eine Schnittkantenmarkierung, beispielswiese eine zumindest im Wesentlichen quer zu einer Schnittebene des Bearbeitungswerkzeugs verlaufende Schnittkantenanzeigelinie, mittels des Lichtstrahls der Lichtquelle auf einem zu bearbeitenden Werkstück anzuzeigen. Die Lichtquelle ist bevorzugt als Laserlichtquelle, besonders bevorzugt als Laserdiode, ausgebildet. Schneidkanten von Schneidzähnen des Bearbeitungswerkzeugs verlaufen vorzugsweise zumindest im Wesentlichen quer zur Schnittebene des Bearbeitungswerkzeugs. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Das Bearbeitungswerkzeug ist vorzugsweise als Kreissägeblatt ausgebildet. Somit übt das Bearbeitungswerkzeug zu einer Einbringung eines Schnitts in das Werkstück vorzugsweise in der Schnittebene des Bearbeitungswerkzeugs eine rotierende Bewegung aus. Die Schnittebene verläuft zu einer Einbringung eines Schnitts in das Werkstück bevorzug zumindest im Wesentlichen quer zu einer Werkstückoberfläche des zu bearbeitenden Werkstücks.

Eine von der Anzeigeeinheit in zumindest einem Betriebszustand auf dem Werkstück abgebildete Schnittkantenanzeigelinie weist insbesondere eine maximale Länge auf, die insbesondere länger ist als 2 mm, bevorzugt länger ist als 5 mm und besonders bevorzugt länger ist als 10 mm. Die von der Anzeigeeinheit in zumindest einem Betriebszustand auf dem Werkstück abgebildete Schnittkantenanzeigelinie wird von einer Quererstreckung, insbesondere von einem Durchmesser, des Lichtstrahls der Lichtquelle gebildet. Die Schnittkantenanzeigelinie zeigt bevorzugt zumindest einen Austrittspunkt oder Eintrittspunkt des Bearbeitungswerkzeugs, insbesondere von Schneidkanten des Bearbeitungswerkzeugs, aus einem oder in ein zu bearbeitendes Werkstück auf einer Werkstückoberfläche des Werkstücks an, an dem das Bearbeitungswerkzeug bei einem Bearbeiten des Werkstücks infolge eines Erreichens einer eingestellten Schnitttiefe des Bearbeitungswerkzeugs aus dem Werkstück austreten oder in das Werkstück eintreten würde bzw. aus dem Werkstück austritt oder in das Werkstück eintritt, insbesondere entkoppelt von einer Verfahrbewegung der tragbaren Werkzeugmaschine auf der Werkstückoberfläche des Werkstücks. Die Anzeigeeinheit bildet die Schnittkantenanzeigelinie vorzugsweise zumindest im Wesentlichen quer, insbesondere zumindest im Wesentlichen senkrecht, zur Schnittebene des Bearbeitungswerkzeugs auf dem Werkstück ab.

Unter einer "Spiegeleinheit" soll in diesem Zusammenhang insbesondere eine Einheit verstanden werden, welche in zumindest einem Betriebszustand zumindest teilweise in einem Strahlungsweg des Lichtstrahls der Lichtquelle angeordnet ist und welche dazu vorgesehen ist, den Lichtstrahl zur Anzeige einer Position einer Schnittkante zumindest teilweise auf das zu bearbeitende Werkstück zu reflektieren. Insbesondere weist die Spiegeleinheit zumindest ein Spiegelelement auf, welches dazu vorgesehen ist, den auftreffenden Lichtstrahl vollständig und/oder zumindest teilweise zu reflektieren, vorzugsweise unter einem einem Einfallswinkel entsprechenden Ausfallswinkel. Insbesondere ist ein Einfallswinkel des Lichtstrahls in Abhängigkeit einer eingestellten Schnitttiefe des Bearbeitungswerkzeugs veränderbar.

Durch eine derartige Ausgestaltung kann eine Schnittlängenanzeigevorrichtung bereitgestellt werden, welche eine vorteilhafte Anzeige einer Schnittkantenanzeigelinie ermöglicht. Ferner kann durch die Schnittlängenanzeigevorrichtung durch Verwendung einer Spiegeleinheit vorteilhaft kompakt, robust, flexibel und/oder preisgünstig ausgeführt werden.

Des Weiteren wird vorgeschlagen, dass eine relative Lage zumindest eines Teils der Spiegeleinheit zur Lichtquelle zu einer Veränderung wenigstens eines Reflektionswinkels veränderbar ist. Unter einer "relativen Lage" soll insbesondere eine relative insbesondere räumliche Position und/oder eine relative insbesondere räumliche Ausrichtung verstanden werden. Insbesondere sind die Lichtquelle und/oder ein Teil der Spiegeleinheit, insbesondere zumindest ein Spiegelelement der Spiegeleinheit, der Anzeigeeinheit insbesondere translatorisch und/oder rotatorisch beweglich gelagert. Die relative Lage zumindest eines Teils der Spiegeleinheit zur Lichtquelle ist insbesondere in Abhängigkeit einer eingestellten Schnitttiefe des Bearbeitungswerkzeugs veränderbar. Insbesondere ist durch eine Veränderung der relativen Lage zumindest eines Teils der Spiegeleinheit zur Lichtquelle ein Einfallswinkel des Lichtstrahls der Lichtquelle auf ein Spiegelelement der Spiegeleinheit veränderbar. Hierdurch kann eine vorteilhaft einfache und/oder präzise Anzeige einer Position einer Schnittkante eines Bearbeitungswerkzeugs in Abhängigkeit einer eingestellten Schnitttiefe des Bearbeitungswerkzeugs erfolgen.

Ferner wird vorgeschlagen, dass die Spiegeleinheit zumindest ein Konkavspiegelelement aufweist, welches dazu vorgesehen ist, den Lichtstrahl auf das Werkstück umzulenken. Unter einem "Konkavspiegelelement" soll in diesem Zusammenhang insbesondere ein Spiegelelement verstanden werden, welches eine zumindest im Wesentlichen asphärisch, sphärisch, hyperbolisch oder parabolisch gewölbte Spiegelfläche aufweist. Insbesondere wird der Lichtstrahl der Lichtquelle unmittelbar oder mittelbar auf eine Spiegelfläche des Konkavspiegelelements projiziert. Insbesondere ist die Lichtquelle zu einer Veränderung eines Reflektionswinkels relativ zu dem Konkavspiegelelement translatorisch verschiebbar gelagert. Eine Wölbung des Konkavspiegelelements ist insbesondere auf ein von einer Geometrie des Bearbeitungswerkzeugs bestimmten Bewegungsprofil der Schnittkanten des Bearbeitungswerkzeugs bei einer Veränderung der Schnitttiefe des Bearbeitungswerkzeugs abgestimmt. Hierdurch kann eine vorteilhaft exakte Anzeige einer Position einer Schnittkante eines Bearbeitungswerkzeugs erreicht werden.

Zudem wird vorgeschlagen, dass die Spiegeleinheit zumindest ein Konkavspiegelelement und zumindest ein Umlenkspiegelelement aufweist, welches dazu vorgesehen ist, den Lichtstrahl auf das Konkavspiegelelement umzulenken. Das Umlenkspiegelelement weist insbesondere eine zumindest im Wesentlichen planare Spiegelfläche auf. Insbesondere ist das Umlenkspiegelelement dazu vorgesehen, den Lichtstrahl der Lichtquelle zwischen der Lichtquelle und dem Konkavspiegelelement um zumindest im Wesentlichen 90° umzulenken. Hierdurch kann eine vorteilhaft flexible Anordnung der Lichtquelle ermöglicht werden.

Des Weiteren wird vorgeschlagen, dass das Umlenkspiegelelement zu einer Veränderung zumindest eines Reflektionswinkels relativ zu dem Konkavspiegelelement verschiebbar ist. Insbesondere ist das Umlenkspiegelelement entlang einer Richtung verschiebbar, welche zumindest im Wesentlichen einer Abstrahlrichtung eines Lichtstrahls von der Lichtquelle entspricht. Hierdurch kann die Lichtquelle vorteilhaft an einer festen Position angeordnet werden, wodurch insbesondere eine Kabelführung vorteilhaft einfach ausgeführt werden kann. Ferner wird vorgeschlagen, dass die Spiegeleinheit zumindest ein um eine Drehachse drehbar gelagertes Spiegelelement aufweist, welches dazu vorgesehen ist, den Lichtstrahl auf das Werkstück umzulenken. Insbesondere ist die Lichtquelle dazu vorgesehen den Lichtstrahl unmittelbar auf eine Spiegelfläche des Spiegelelements zu projizieren. Insbesondere ist das Spiegelelement in Abhängigkeit der eingestellten Schnitttiefe des Bearbeitungswerkzeugs um die Drehachse drehbar. In einer bevorzugten Ausgestaltung der Erfindung wird vorgeschlagen, dass das Spiegelelement an einer Außenkontur zumindest eine konvex gewölbte Spiegelfläche aufweist. Insbesondere weist die Außenkontur des Spiegelelements eine zumindest im Wesentlichen ovale Form auf. Eine Wölbung der Außenkontur ist insbesondere auf ein von einer Geometrie des Bearbeitungswerkzeugs bestimmten Bewegungsprofil der Schnittkanten des Bearbeitungswerkzeugs bei einer Veränderung der Schnitttiefe des Bearbeitungswerkzeugs abgestimmt. In einer weiteren bevorzugten Ausgestaltung der Erfindung wird vorgeschlagen, dass das Spiegelelement eine Mehrzahl von planaren Spiegelfläche aufweist, welche in Umfangsrichtung an dem Spiegelelement angeordnet sind. Das Spiegelelement weist insbesondere einen zumindest im Wesentlichen kreisförmigen oder ringförmigen Grundkörper auf. Die planaren Spiegelflächen sind an einem Außenumfang des Grundkörpers angeordnet. Eine Anordnung der planaren Spiegelflächen an dem Grundkörper ist insbesondere auf ein von einer Geometrie des Bearbeitungswerkzeugs bestimmten Bewegungsprofil der Schnittkanten des Bearbeitungswerkzeugs bei einer Veränderung der Schnitttiefe des Bearbeitungswerkzeugs abgestimmt. Hierdurch kann eine vorteilhaft einfache und/oder präzise Umlenkung des Lichtstrahls in Abhängigkeit der eingestellten Schnitttiefe des Bearbeitungswerkzeugs erfolgen.

Des Weiteren wird vorgeschlagen, dass die Spiegeleinheit zumindest einen Seilzug aufweist, welcher dazu vorgesehen ist, das Spiegelelement in Abhängigkeit der eingestellten Schnitttiefe des Bearbeitungswerkzeugs in eine Drehbewegung zu versetzen. Unter einem "Seilzug" soll in diesem Zusammenhang insbesondere eine Einheit verstanden werden, welche zumindest ein Seil aufweist, das zu einer Übertragung von zumindest einer Kraft vorgesehen ist. Insbesondere weist die Seilzugeinheit zumindest ein Zugseil auf. Unter einem "Zugseil" soll insbesondere ein Seil verstanden werden, welches dazu vorgesehen ist, mittels einer Zugbewegung zumindest einen insbesondere mechanischen Prozess zu beeinflussen. Unter einem "Seil" soll insbesondere ein längliches, biegeschlaffes Element verstanden werden. Insbesondere kann das Seil aus einer Mehrzahl insbesondere zusammengedrehter Naturfasern, Kunstfasern und/oder Drähten bestehen oder von einer Einzelfaser oder einem Einzeldraht gebildet sein. Insbesondere kann der Seilzug neben zumindest einem Seil weitere Elemente, beispielsweise feste und/oder lose Rollen oder weitere Seile, umfassen. Hierdurch kann vorteilhaft einfach eine Umlenkung des Lichtstrahls in Abhängigkeit der eingestellten Schnitttiefe des Bearbeitungswerkzeugs erfolgen.

Ferner wird eine Werkzeugmaschine, insbesondere tragbare Werkzeugmaschine, insbesondere Kreissäge, mit zumindest einer erfindungsgemäßen Schnittlängenanzeigevorrichtung vorgeschlagen. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Besonders bevorzugt ist die tragbare Werkzeugmaschine als Tauchkreissäge ausgebildet. Es ist jedoch auch denkbar, dass die Werkzeugmaschine eine andere, einem Fachmann als sinnvoll erscheinende Ausgestaltung aufweist. Vorzugsweise weist die Werkzeugmaschine eine Schnitttiefeneinstelleinheit auf, welche dazu vorgesehen ist, eine Schnitttiefe des mit einer Werkzeugaufnahme der tragbaren Werkzeugmaschine koppelbaren Bearbeitungswerkzeugs einzustellen. Der Ausdruck "Schnitttiefeneinstelleinheit" soll hier insbesondere eine Einheit definieren, die dazu vorgesehen ist, eine Eintauchstrecke des mit der Werkzeugaufnahme der tragbaren Werkzeugmaschine verbundenen Bearbeitungswerkzeugs, insbesondere eines Kreissägeblatts, in ein zu bearbeitendes Werkstück zu begrenzen und/oder eine Länge einer Eintauchstrecke des Bearbeitungswerkzeugs in das zu bearbeitende Werkstück einzustellen. Die Eintauchstrecke des Bearbeitungswerkzeugs in das zu bearbeitende Werkstück wird hierbei insbesondere entlang einer zumindest im Wesentlichen senkrecht zu einer Auflagefläche einer Auflageeinheit der tragbaren Werkzeugmaschine, mit der die tragbare Werkzeugmaschine auf einer Werkstückoberfläche eines zu bearbeitenden Werkstücks aufliegt, verlaufenden Richtung betrachtet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Hierdurch kann eine vorteilhaft präzise Bearbeitung eines Werkstücks mittels der tragbaren Werkzeugmaschine erreicht werden.

Ferner wird vorgeschlagen, dass die Schnittlängenanzeigevorrichtung zumindest die Bewegungskopplungseinheit umfasst, die dazu vorgesehen ist, zumindest die Lichtquelle und/oder zumindest ein Spiegelelement in Abhängigkeit einer Bewegung eines Schnitttiefeneinstellelements der Schnitttiefeneinstelleinheit zu bewegen. Das Schnitttiefeneinstellelement ist besonders bevorzugt als Tiefenanschlag ausgebildet, der eine Eintauchstrecke des mit einer Werkzeugaufnahme der tragbaren Werkzeugmaschine verbundenen Bearbeitungswerkzeugs, insbesondere eines Kreissägeblatts, in das zu bearbeitende Werkstück begrenzt und/oder mittels dessen eine Länge der Eintauchstrecke einstellbar ist. Hierdurch kann vorteilhaft eine Kopplung der Lichtquelle und/oder eines Spiegelelements mit dem Schnitttiefeneinstellelement erreicht werden. Somit kann vorteilhaft eine von einer Position des Schnitttiefeneinstellelements abhängige Einstellung einer Position der Lichtquelle und/oder eines Spiegelelements erreicht werden. Es kann hierdurch vorteilhaft eine präzise Anzeige einer Schnittlänge des Bearbeitungswerkzeugs in Abhängigkeit einer eingestellten Schnitttiefe des Bearbeitungswerkzeugs erreicht werden.

Die erfindungsgemäße Schnittlängenanzeigevorrichtung und/oder die erfindungsgemäße Werkzeugmaschine soll/sollen hierbei nicht auf die oben beschriebene Anwendung und Ausführungsform beschränkt sein. Insbesondere können die erfindungsgemäße Schnittlängenanzeigevorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: eine vereinfachte Darstellung einer tragbaren Werkzeugmaschine, die eine Schnittlängenanzeigevorrichtung aufweist,
- Fig. 2: eine vereinfachte Darstellung einer tragbaren Werkzeugmaschine, die eine alternative Schnittlängenanzeigevorrichtung aufweist,
- Fig. 3: eine vereinfachte Darstellung einer tragbaren Werkzeugmaschine, die eine weitere alternative Schnittlängenanzeigevorrichtung aufweist,
- Fig. 4: eine vereinfachte Darstellung einer tragbaren Werkzeugmaschine, die eine weitere alternative Schnittlängenanzeigevorrichtung aufweist,
- Fig. 5: eine vereinfachte Darstellung einer tragbaren Werkzeugmaschine, die eine weitere alternative Schnittlängenanzeigevorrichtung aufweist und
- Fig. 6: eine vereinfachte Darstellung einer tragbaren Werkzeugmaschine, die eine weitere alternative Schnittlängenanzeigevorrichtung aufweist.

### Beschreibung der Ausführungsbeispiele

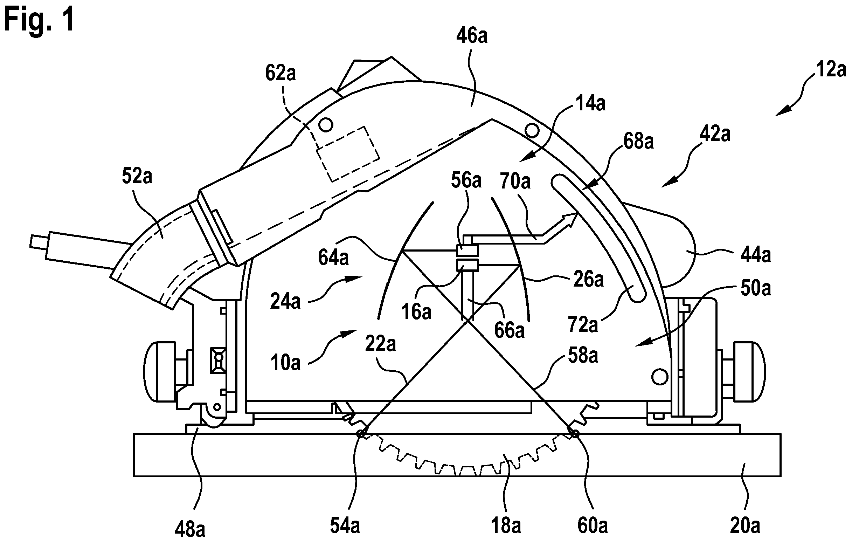

Figur 1 zeigt eine vereinfachte Darstellung einer als Kreissäge, insbesondere als Tauchkreissäge, ausgebildete tragbare Werkzeugmaschine 12a. Die als Tauchkreissäge ausgebildete tragbare Werkzeugmaschine 12a umfasst eine Schnitttiefeneinstelleinheit 42a zu einer Einstellung einer Schnitttiefe eines Bearbeitungswerkzeugs 18a und zumindest eine Schnittlängenanzeigevorrichtung 10a. Mittels einer Einstellung einer Position eines Schnitttiefeneinstellelements 44a kann eine Schnitttiefe des Bearbeitungswerkzeugs 18a auf eine, einem Fachmann bereits bekannte Art und Weise eingestellt werden. Das Bearbeitungswerkzeug 18a ist mit einer Werkzeugaufnahme (hier nicht näher dargestellt) der tragbaren Werkzeugmaschine 12a verbunden. Die tragbare Werkzeugmaschine 12a umfasst ferner ein Werkzeugmaschinengehäuse 46a, das dazu vorgesehen ist, eine nicht dargestellte Antriebseinheit der tragbaren Werkzeugmaschine 12a zu umschließen. Die Antriebseinheit umfasst eine Antriebswelle, die zu einem Antrieb des mit der Werkzeugaufnahme koppelbaren Bearbeitungswerkzeugs 18a auf eine, einem Fachmann bereits bekannte Art und Weise vorgesehen ist.

Ferner umfasst die tragbare Werkzeugmaschine 12a eine als Grundplatte oder als Gleitschuh ausgebildete Auflageeinheit 48a mit der die tragbare Werkzeugmaschine 12a bei einer Bearbeitung eines Werkstücks 20a auf einer Werkstückoberfläche des Werkstücks 20a aufliegt bzw. bei einer Bewegung zu einer Einbringung eines Schnitts in das Werkstück 20a auf der Werkstückoberfläche gleitet. An der Auflageeinheit 48a ist zudem eine Schutzeinheit 50a der tragbaren Werkzeugmaschine 12a angeordnet, welche dazu vorgesehen ist, einen Bediener vor Verletzungen bei einer Bearbeitung des Werkstücks 20a zu schützen. Hierbei ist die Schutzeinheit 50a als Schutzhaube ausgebildet, die das Bearbeitungswerkzeug 18a in einem montierten Zustand entlang einer Rotationsrichtung der Antriebswelle um mehr als 160° umschließt. Die Schutzeinheit 50a weist ferner ein Absaugkopplungselement 52a auf, das mit einer Absaugeinheit (hier nicht näher dargestellt) zu einer Absaugung von abgetragenen Werkstückpartikeln während einer Bearbeitung des Werkstücks 20a verbindbar ist.

Die Schnittlängenanzeigevorrichtung 10a für die tragbare Werkzeugmaschine 12a weist eine Anzeigeeinheit 14a auf, welche eine Lichtquelle 16a umfasst und dazu vorgesehen ist, zumindest eine Position einer Schnittkante des Bearbeitungswerkzeugs 18a auf einem zu bearbeitenden Werkstück 20a in Abhängigkeit einer eingestellten Schnitttiefe des Bearbeitungswerkzeugs 18a mittels eines Lichtstrahls 22a anzuzeigen. Ferner weist die Anzeigeeinheit 14a eine weitere Lichtquelle 56a auf. Die Anzeigeeinheit 14a ist in zumindest einem Betriebszustand zu einer Anzeige zumindest einer Position einer weiteren Schnittkante des Bearbeitungswerkzeugs 18a mittels eines weiteren Lichtstrahls 58a vorgesehen. Die Anzeigeeinheit 14a ist als Laseranzeigeeinheit ausgebildet. Die Lichtquelle 16a und die weitere Lichtquelle 56a sind als Laserlichtquellen ausgebildet. Die Anzeigeeinheit 14a bildet in zumindest einem Betriebszustand zu einer Anzeige der Position der Schnittkante eine zumindest im Wesentlichen quer zu einer Schnittebene des Bearbeitungswerkzeugs 18a verlaufende Schnittkantenanzeigelinie 54a mittels des Lichtstrahls 22a auf dem zu bearbeitenden Werkstück 20a ab. Die Anzeigeeinheit 14a bildet in zumindest einem Betriebszustand zu einer Anzeige der Position der weiteren Schnittkante eine weitere zumindest im Wesentlichen quer zur Schnittebene des Bearbeitungswerkzeugs 18a verlaufende Schnittkantenanzeigelinie 60a mittels des weiteren Lichtstrahls 58a auf dem zu bearbeitenden Werkstück 20a ab. Die Lichtquelle 16a und die weitere Lichtquelle 56a werden zu einer Erzeugung der Lichtstrahlen 22a, 58a durch eine Energieeinheit 62a der Schnittlängenanzeigevorrichtung 10a bzw. der tragbaren Werkzeugmaschine 12a mit Energie versorgt. Hierbei kann die Energieeinheit 62a von einem separaten Akkumulator-Paket gebildet sein oder die Energieeinheit 62a ist elektrisch mit einer Energieversorgungseinheit (hier nicht näher dargestellt) der tragbaren Werkzeugmaschine 12a elektrisch verbunden.

Die mittels des Lichtstrahls 22a auf dem Werkstück 20a abgebildete Schnittkantenanzeigelinie 54a ist dazu vorgesehen, eine Position einer, betrachtet entlang einer entgegen einer Bewegungsrichtung der tragbaren Werkzeugmaschine 12a zu einer Einbringung eines Schnitts in das Werkstück 20a verlaufenden Richtung, hintere Schnittkante des Bearbeitungswerkzeugs 18a auf dem zu bearbeitenden Werkstück 20a anzuzeigen. Die hintere Schnittkante des Bearbeitungswerkzeugs 18a entspricht einer hinteren Austrittskante von Schneidkanten des Bearbeitungswerkzeugs 18a aus dem zu bearbeitenden Werkstück 20a bei einem Erreichen einer mittels der Schnitttiefeneinstelleinheit 42a eingestellten Schnitttiefe des Bearbeitungswerkzeugs 18a. Die weitere Schnittkantenanzeigelinie 60a ist dazu vorgesehen, eine Position einer, betrachtet entlang der entgegen der Bewegungsrichtung der tragbaren Werkzeugmaschine 12a zu einer Einbringung eines Schnitts in das Werkstück 20a verlaufenden Richtung, vorderen Schnittkante des Bearbeitungswerkzeugs 18a auf dem zu bearbeitenden Werkstück 20a anzuzeigen. Die vordere Schnittkante des Bearbeitungswerkzeugs 18a entspricht einer vorderen Eintrittskante von Schneidkanten des Bearbeitungswerkzeugs 18a in das zu bearbeitende Werkstück 20a bei einem Erreichen einer mittels der Schnitttiefeneinstelleinheit 42a eingestellten Schnitttiefe des Bearbeitungswerkzeugs 18a.

Die Anzeigeeinheit 14a weist eine Spiegeleinheit 24a auf, welche dazu vorgesehen ist, die Lichtstrahlen 22a, 58a in Abhängigkeit der eingestellten Schnitttiefe des Bearbeitungswerkzeugs 18a umzulenken. Eine relative Lage zumindest eines Teils der Spiegeleinheit 24a zu den Lichtquellen 16a, 56a ist zu einer Veränderung eines Reflektionswinkels veränderbar. Die Spiegeleinheit 24a weist zwei Konkavspiegelelemente 26a, 64a auf, welche dazu vorgesehen sind, die Lichtstrahlen 22a, 58a auf das Werkstück 20a umzulenken. Die Lichtquellen 16a, 56a sind entlang einer senkrecht zu der Auflageeinheit 48a verlaufenden Führungsbahn 66a relativ zu den Konkavspiegelelementen 26a, 64a verschiebbar.

Des Weiteren umfasst die Schnittlängenanzeigevorrichtung 10a eine Bewegungskopplungseinheit 68a, welche die Lichtquellen 16a, 56a der Anzeigeeinheit 14a bewegungsabhängig mit dem Schnitttiefeneinstellelement 44a der Schnitttiefeneinstelleinheit 42a verbindet. Die Lichtquellen 16a, 56a sind mit einem Bewegungskopplungselement 70a der Bewegungskopplungseinheit 68a verbunden. Das Schnitttiefeneinstellelement 44a ist zu einer Einstellung einer Schnitttiefe des Bearbeitungswerkzeugs 18a beweglich an einem Führungsbahnelement 72a der Schnitttiefeneinstelleinheit 42a gelagert. Das Führungsbahnelement 72a ist an der Schutzeinheit 50a angeordnet. Bei einer Bewegung des Schnitttiefeneinstellelements 44a relativ zum Führungsbahnelement 72a wird das Bewegungskopplungselement 70a infolge der Verbindung mit dem Schnitttiefeneinstellelement 44a ebenfalls relativ zum Führungsbahnelement 72a entlang eines Verlaufs des Führungsbahnelements 72a bewegt, wodurch ein Verschieben der Lichtquellen 16a, 56a entlang der Führungsbahn 66a erfolgt. Die Verschiebung der Lichtquellen 16a, 56a relativ zu den Konkavspiegelelementen 26a, 64a resultiert in einer Veränderung des Reflektionswinkels der Lichtstrahlen 22a, 58a in Richtung des Werkstücks 20a.

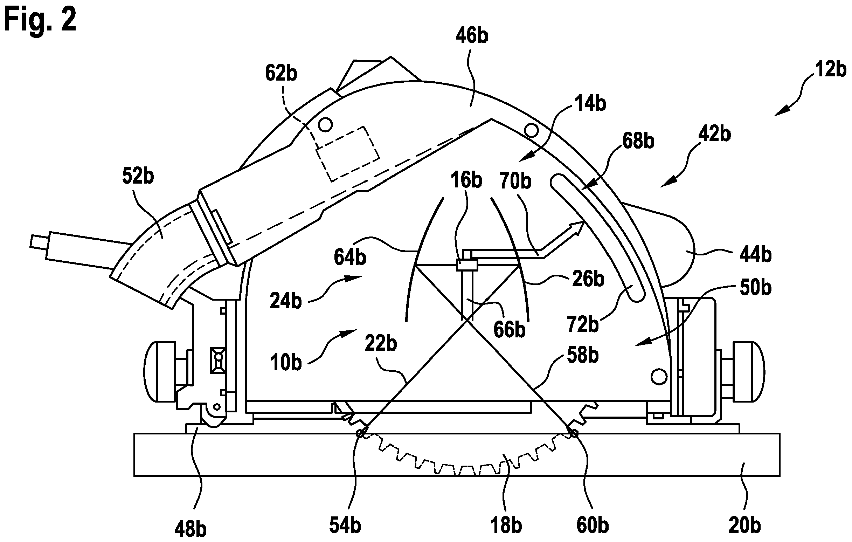

In Figuren 2 bis 6 sind fünf alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis f hinzugefügt. Die nachfolgende Beschreibung beschränkt sich im Wesentlichen auf die Unterschiede zu dem in Figur 1 beschriebenen ersten Ausführungsbeispiel, wobei bezüglich gleichbleibender Bauteile, Merkmale und Funktionen auf die Beschreibung des ersten Ausführungsbeispiels in Figur 1 verwiesen werden kann. In den Ausführungsbeispielen der Figuren 2 bis 6 ist der Buchstabe a durch die Buchstaben b bis f ersetzt.

Figur 2 zeigt eine als Tauchkreissäge ausgebildete tragbare Werkzeugmaschine 12b, die eine Schnitttiefeneinstelleinheit 42b zu einer Einstellung einer Schnitttiefe eines Bearbeitungswerkzeugs 18b und eine alternative Ausgestaltung einer Schnittlängenanzeigevorrichtung 10b umfasst.

Die Schnittlängenanzeigevorrichtung 10b weist eine Anzeigeeinheit 14b auf, welche eine Lichtquelle 16b umfasst und dazu vorgesehen ist, zumindest eine Position einer Schnittkante des Bearbeitungswerkzeugs 18b auf einem zu bearbeitenden Werkstück 20b in Abhängigkeit einer eingestellten Schnitttiefe eines Bearbeitungswerkzeugs 18b mittels eines Lichtstrahls 22b anzuzeigen. Die Anzeigeeinheit 14b ist in zumindest einem Betriebszustand zu einer Anzeige zumindest einer Position einer weiteren Schnittkante des Bearbeitungswerkzeugs 18b mittels eines weiteren Lichtstrahls 58b vorgesehen. Die Lichtquelle 16b ist dazu vorgesehen den Lichtstrahl 22b und den weiteren Lichtstrahl 58b zu erzeugen.

Die Anzeigeeinheit 14b ist als Laseranzeigeeinheit ausgebildet. Die Lichtquelle 16b ist als Laserlichtquelle ausgebildet. Die Anzeigeeinheit 14b bildet in zumindest einem Betriebszustand zu einer Anzeige der Position der Schnittkante eine zumindest im Wesentlichen quer zu einer Schnittebene des Bearbeitungswerkzeugs 18b verlaufende Schnittkantenanzeigelinie 54b mittels des Lichtstrahls 22b auf dem zu bearbeitenden Werkstück 20b ab. Die Anzeigeeinheit 14b bildet in zumindest einem Betriebszustand zu einer Anzeige der Position der weiteren Schnittkante eine weitere zumindest im Wesentlichen quer zur Schnittebene des Bearbeitungswerkzeugs 18b verlaufende Schnittkantenanzeigelinie 60b mittels des weiteren Lichtstrahls 58b auf dem zu bearbeitenden Werkstück 20b ab.

Die Anzeigeeinheit 14b weist eine Spiegeleinheit 24b auf, welche dazu vorgesehen ist, die Lichtstrahlen 22b, 58b in Abhängigkeit der eingestellten Schnitttiefe des Bearbeitungswerkzeugs 18b umzulenken. Eine relative Lage zumindest eines Teils der Spiegeleinheit 24b zu der Lichtquelle 16b ist zu einer Veränderung eines Reflektionswinkels veränderbar. Die Spiegeleinheit 24b weist zwei Konkavspiegelelemente 26b, 64b auf, welche dazu vorgesehen sind, die Lichtstrahlen 22b, 58b auf das Werkstück 20b umzulenken. Die Lichtquelle 16b ist entlang einer senkrecht zu einer Auflageeinheit 48b der Werkzeugmaschine 12b verlaufenden Führungsbahn 66b relativ zu den Konkavspiegelelementen 26b, 64b verschiebbar.

Des Weiteren umfasst die Schnittlängenanzeigevorrichtung 10b eine Bewegungskopplungseinheit 68b, die die Lichtquelle 16b bewegungsabhängig mit einem Schnitttiefeneinstellelement 44b der Schnitttiefeneinstelleinheit 42b verbindet. Die Lichtquelle 16b ist mit einem Bewegungskopplungselement 70b der Bewegungskopplungseinheit 68b verbunden. Das Schnitttiefeneinstellelement 44b ist zu einer Einstellung einer Schnitttiefe des Bearbeitungswerkzeugs 18b beweglich an einem Führungsbahnelement 72b der Schnitttiefeneinstelleinheit 42b gelagert. Das Führungsbahnelement 72b ist an der Schutzeinheit 50b angeordnet. Bei einer Bewegung des Schnitttiefeneinstellelements 44b relativ zum Führungsbahnelement 72b wird das Bewegungskopplungselement 70b infolge der Verbindung mit dem Schnitttiefeneinstellelement 44b ebenfalls relativ zum Führungsbahnelement 72b entlang eines Verlaufs des Führungsbahnelements 72b bewegt, wodurch ein Verschieben der Lichtquelle 16b entlang der Führungsbahn 66b erfolgt. Die Verschiebung der Lichtquelle 16b relativ zu den Konkavspiegelelementen 26b, 64b resultiert in einer Veränderung des Reflektionswinkels der Lichtstrahlen 22b, 58b in Richtung des Werkstücks 20b.

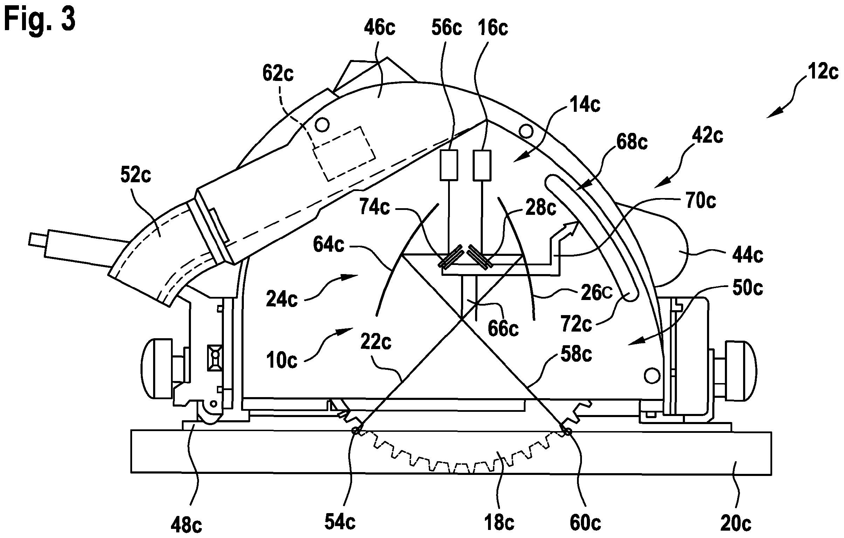

Figur 3 zeigt eine als Tauchkreissäge ausgebildete tragbare Werkzeugmaschine 12c, die eine Schnitttiefeneinstelleinheit 42c zu einer Einstellung einer Schnitttiefe eines Bearbeitungswerkzeugs 18c und eine weitere alternative Ausgestaltung einer Schnittlängenanzeigevorrichtung 10c umfasst.

Die Schnittlängenanzeigevorrichtung 10c weist eine Anzeigeeinheit 14c auf, welche zwei Lichtquellen 16c, 56c umfasst und dazu vorgesehen ist, zumindest eine Position einer Schnittkante des Bearbeitungswerkzeugs 18c auf einem zu bearbeitenden Werkstück 20c in Abhängigkeit einer eingestellten Schnitttiefe eines Bearbeitungswerkzeugs 18c mittels Lichtstrahlen 22c, 58c anzuzeigen. Die Lichtquellen 16c, 56c sind als Laserlichtquellen ausgebildet. Die Anzeigeeinheit 14c bildet in zumindest einem Betriebszustand zu einer Anzeige der Position der Schnittkante eine zumindest im Wesentlichen quer zu einer Schnittebene des Bearbeitungswerkzeugs 18c verlaufende Schnittkantenanzeigelinie 54c mittels des Lichtstrahls 22c auf dem zu bearbeitenden Werkstück 20c ab. Die Anzeigeeinheit 14c bildet in zumindest einem Betriebszustand zu einer Anzeige der Position der weiteren Schnittkante eine weitere zumindest im Wesentlichen quer zur Schnittebene des Bearbeitungswerkzeugs 18c verlaufende Schnittkantenanzeigelinie 60c mittels des weiteren Lichtstrahls 58c auf dem zu bearbeitenden Werkstück 20c ab.

Die Anzeigeeinheit 14c weist eine Spiegeleinheit 24c auf, welche dazu vorgesehen ist, die Lichtstrahlen 22c, 58c in Abhängigkeit der eingestellten Schnitttiefe des Bearbeitungswerkzeugs 18c umzulenken. Eine relative Lage zumindest eines Teils der Spiegeleinheit 24c zu den Lichtquellen 16c, 56c ist zu einer Veränderung eines Reflektionswinkels veränderbar. Die Spiegeleinheit 24c weist zwei Konkavspiegelelemente 26c, 64c und zwei Umlenkspiegelelemente 28c, 74c auf, welche dazu vorgesehen sind, die Lichtstrahlen 22c, 58c auf die Konkavspiegelelemente 26c, 64c umzulenken. Die Konkavspiegelelemente 26c, 64c sind dazu vorgesehen, die Lichtstrahlen 22c, 58c auf das Werkstück 20c umzulenken. Die Umlenkspiegelelemente 28c, 74c sind entlang einer senkrecht zu einer Auflageeinheit 48c der Werkzeugmaschine 12c verlaufenden Führungsbahn 66c relativ zu den Konkavspiegelelementen 26c, 64c verschiebbar.

Des Weiteren umfasst die Schnittlängenanzeigevorrichtung 10c eine Bewegungskopplungseinheit 68c, welche die Umlenkspiegelelemente 28c, 74c bewegungsabhängig mit dem Schnitttiefeneinstellelement 44c der Schnitttiefeneinstelleinheit 42c verbindet. Die Umlenkspiegelelemente 28c, 74c sind mit einem Bewegungskopplungselement 70c der Bewegungskopplungseinheit 68c verbunden. Das Schnitttiefeneinstellelement 44c ist zu einer Einstellung einer Schnitttiefe des Bearbeitungswerkzeugs 18c beweglich an einem Führungsbahnelement 72c der Schnitttiefeneinstelleinheit 42c gelagert. Das Führungsbahnelement 72c ist an der Schutzeinheit 50c angeordnet. Bei einer Bewegung des Schnitttiefeneinstellelements 44c relativ zum Führungsbahnelement 72c wird das Bewegungskopplungselement 70c infolge der Verbindung mit dem Schnitttiefeneinstellelement 44c ebenfalls relativ zum Führungsbahnelement 72c entlang eines Verlaufs des Führungsbahnelements 72c bewegt, wodurch ein Verschieben der Umlenkspiegelelemente 28c, 74c entlang der Führungsbahn 66c erfolgt. Die Verschiebung der Umlenkspiegelelemente 28c, 74c relativ zu den Konkavspiegelelementen 26c, 64c resultiert in einer Veränderung des Reflektionswinkels der Lichtstrahlen 22c, 58c in Richtung des Werkstücks 20c.

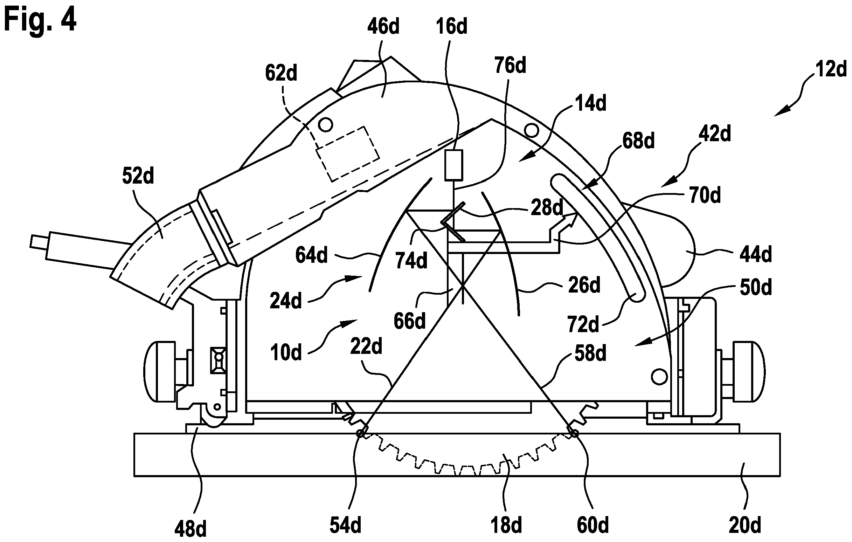

Figur 4 zeigt eine als Tauchkreissäge ausgebildete tragbare Werkzeugmaschine 12d, die eine Schnitttiefeneinstelleinheit 42d zu einer Einstellung einer Schnitttiefe eines Bearbeitungswerkzeugs 18d und eine weitere alternative Ausgestaltung einer Schnittlängenanzeigevorrichtung 10d umfasst.

Die Schnittlängenanzeigevorrichtung 10d weist eine Anzeigeeinheit 14d auf, welche eine Lichtquelle 16d umfasst und dazu vorgesehen ist, zumindest eine Position einer Schnittkante des Bearbeitungswerkzeugs 18d auf einem zu bearbeitenden Werkstück 20d in Abhängigkeit einer eingestellten Schnitttiefe eines Bearbeitungswerkzeugs 18d mittels Lichtstrahlen 22d, 58d anzuzeigen. Die Lichtquelle 16d ist als Laserlichtquelle ausgebildet. Die Anzeigeeinheit 14d bildet in zumindest einem Betriebszustand zu einer Anzeige der Position der Schnittkante eine zumindest im Wesentlichen quer zu einer Schnittebene des Bearbeitungswerkzeugs 18d verlaufende Schnittkantenanzeigelinie 54d mittels des Lichtstrahls 22d auf dem zu bearbeitenden Werkstück 20d ab. Die Anzeigeeinheit 14d bildet in zumindest einem Betriebszustand zu einer Anzeige der Position der weiteren Schnittkante eine weitere zumindest im Wesentlichen quer zur Schnittebene des Bearbeitungswerkzeugs 18d verlaufende Schnittkantenanzeigelinie 60d mittels des weiteren Lichtstrahls 58d auf dem zu bearbeitenden Werkstück 20d ab.

Die Anzeigeeinheit 14d weist eine Spiegeleinheit 24d auf, welche dazu vorgesehen ist, die Lichtstrahlen 22d, 58d in Abhängigkeit der eingestellten Schnitttiefe des Bearbeitungswerkzeugs 18d umzulenken. Eine relative Lage zumindest eines Teils der Spiegeleinheit 24d zu den Lichtquellen 16c, 56c ist zu einer Veränderung eines Reflektionswinkels veränderbar. Die Spiegeleinheit 24d weist zwei Konkavspiegelelemente 26d, 64d und zwei Umlenkspiegelelemente 28d, 74d auf. Die Umlenkspiegelelemente 28d, 74d sind dazu vorgesehen, einen von der Lichtquelle 16d ausgehenden Lichtstrahl 76d in die Lichtstrahlen 22d, 58d aufzuteilen und die Lichtstrahlen 22d, 58d auf die Konkavspiegelelemente 26d, 64d umzulenken. Ein erstes Umlenkspiegelelement 28d ist halbdurchlässig ausgebildet, so dass der Lichtstrahl 22d das erste Umlenkspiegelelement 28d passiert, während der Lichtstrahl 58d auf das Konkavspiegelelement 64d umgelenkt wird. Der Lichtstrahl 22d wird von dem zweiten Umlenkspiegelelement 74d auf das Konkavspiegelelement 26d umgelenkt. Die Konkavspiegelelemente 26d, 64d sind dazu vorgesehen, die Lichtstrahlen 22d, 58d auf das Werkstück 20d umzulenken. Die Umlenkspiegelelemente 28d, 74d sind entlang einer senkrecht zu einer Auflageeinheit 48d der Werkzeugmaschine 12d verlaufenden Führungsbahn 66d relativ zu den Konkavspiegelelementen 26d, 64d verschiebbar.

Des Weiteren umfasst die Schnittlängenanzeigevorrichtung 10d eine Bewegungskopplungseinheit 68d, welche die Umlenkspiegelelemente 28d, 74d bewegungsabhängig mit dem Schnitttiefeneinstellelement 44d der Schnitttiefeneinstelleinheit 42d verbindet. Die Umlenkspiegelelemente 28d, 74d sind mit einem Bewegungskopplungselement 70d der Bewegungskopplungseinheit 68d verbunden. Das Schnitttiefeneinstellelement 44d ist zu einer Einstellung einer Schnitttiefe des Bearbeitungswerkzeugs 18d beweglich an einem Führungsbahnelement 72d der Schnitttiefeneinstelleinheit 42d gelagert. Das Führungsbahnelement 72d ist an der Schutzeinheit 50d angeordnet. Bei einer Bewegung des Schnitttiefeneinstellelements 44d relativ zum Führungsbahnelement 72d wird das Bewegungskopplungselement 70d infolge der Verbindung mit dem Schnitttiefeneinstellelement 44d ebenfalls relativ zum Führungsbahnelement 72d entlang eines Verlaufs des Führungsbahnelements 72d bewegt, wodurch ein Verschieben der Umlenkspiegelelemente 28d, 74d entlang der Führungsbahn 66d erfolgt. Die Verschiebung der Umlenkspiegelelemente 28d, 74d relativ zu den Konkavspiegelelementen 26d, 64d resultiert in einer Veränderung des Reflektionswinkels der Lichtstrahlen 22d, 58d in Richtung des Werkstücks 20d.

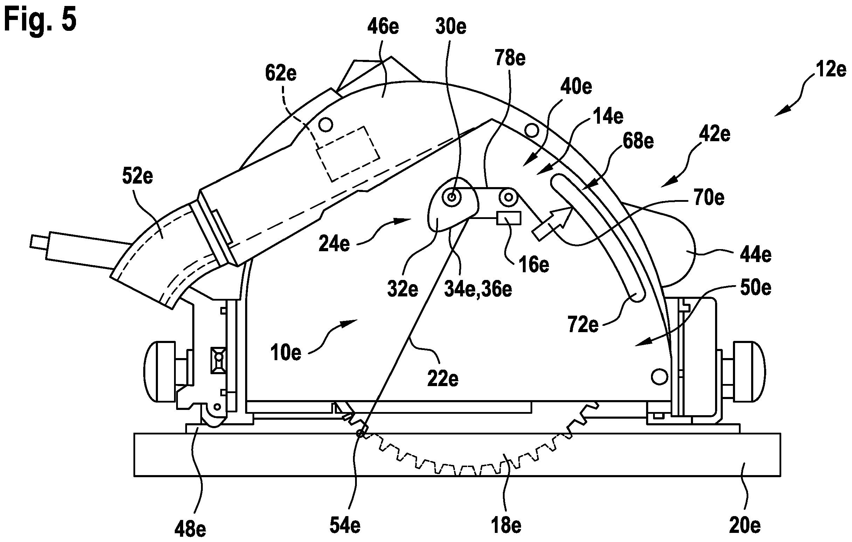

Figur 5 zeigt eine als Tauchkreissäge ausgebildete tragbare Werkzeugmaschine 12e, die eine Schnitttiefeneinstelleinheit 42e zu einer Einstellung einer Schnitttiefe eines Bearbeitungswerkzeugs 18e und eine weitere alternative Ausgestaltung einer Schnittlängenanzeigevorrichtung 10e umfasst.

Die Schnittlängenanzeigevorrichtung 10e weist eine Anzeigeeinheit 14e auf, welche eine Lichtquelle 16e umfasst und dazu vorgesehen ist, zumindest eine Position einer Schnittkante des Bearbeitungswerkzeugs 18e auf einem zu bearbeitenden Werkstück 20e in Abhängigkeit einer eingestellten Schnitttiefe eines Bearbeitungswerkzeugs 18e mittels eines Lichtstrahls 22e anzuzeigen. Die Lichtquelle 16e ist als Laserlichtquelle ausgebildet. Die Anzeigeeinheit 14e bildet in zumindest einem Betriebszustand zu einer Anzeige der Position der Schnittkante eine zumindest im Wesentlichen quer zu einer Schnittebene des Bearbeitungswerkzeugs 18e verlaufende Schnittkantenanzeigelinie 54e mittels des Lichtstrahls 22e auf dem zu bearbeitenden Werkstück 20e ab.

Die Anzeigeeinheit 14e weist eine Spiegeleinheit 24e auf, welche dazu vorgesehen ist, den Lichtstrahl 22e in Abhängigkeit der eingestellten Schnitttiefe des Bearbeitungswerkzeugs 18e umzulenken. Eine relative Lage zumindest eines Teils der Spiegeleinheit 24e zu der Lichtquelle 16e ist zu einer Veränderung eines Reflektionswinkels veränderbar. Die Spiegeleinheit 24e weist ein um eine Drehachse 30e drehbar gelagertes Spiegelelement 32e auf, welches dazu vorgesehen ist, den Lichtstrahl 22e auf das Werkstück 20e umzulenken. Das Spiegelelement 32e weist an einer Außenkontur 34e eine konvex gewölbte Spiegelfläche 36e auf. Ferner weist die Spiegeleinheit 24e einen Seilzug 40e auf, welcher dazu vorgesehen ist, das Spiegelelement 32e in Abhängigkeit der eingestellten Schnitttiefe des Bearbeitungswerkzeugs 18e in eine Drehbewegung zu versetzen.

Des Weiteren umfasst die Schnittlängenanzeigevorrichtung 10e eine Bewegungskopplungseinheit 68e, die das Spiegelelement 32e bewegungsabhängig mit dem Schnitttiefeneinstellelement 44e der Schnitttiefeneinstelleinheit 42e verbindet. Der Seilzug 40e ist mit einem Bewegungskopplungselement 70e der Bewegungskopplungseinheit 68e verbunden. Das Schnitttiefeneinstellelement 44e ist zu einer Einstellung einer Schnitttiefe des Bearbeitungswerkzeugs 18e beweglich an einem Führungsbahnelement 72e der Schnitttiefeneinstelleinheit 42e gelagert. Das Führungsbahnelement 72e ist an der Schutzeinheit 50e angeordnet. Bei einer Bewegung des Schnitttiefeneinstellelements 44e relativ zum Führungsbahnelement 72e wird das Bewegungskopplungselement 70e infolge der Verbindung mit dem Schnitttiefeneinstellelement 44e ebenfalls relativ zum Führungsbahnelement 72e entlang eines Verlaufs des Führungsbahnelements 72e bewegt, wodurch eine Bewegung eines Zugseils 78e des Seilzugs 40e erfolgt.

Die Bewegung des Zugseils 78e bewirkt eine Drehbewegung des Spiegelelements 32e und eine daraus resultierende Veränderung des Reflektionswinkels des Lichtstrahls 22e in Richtung des Werkstücks 20e.

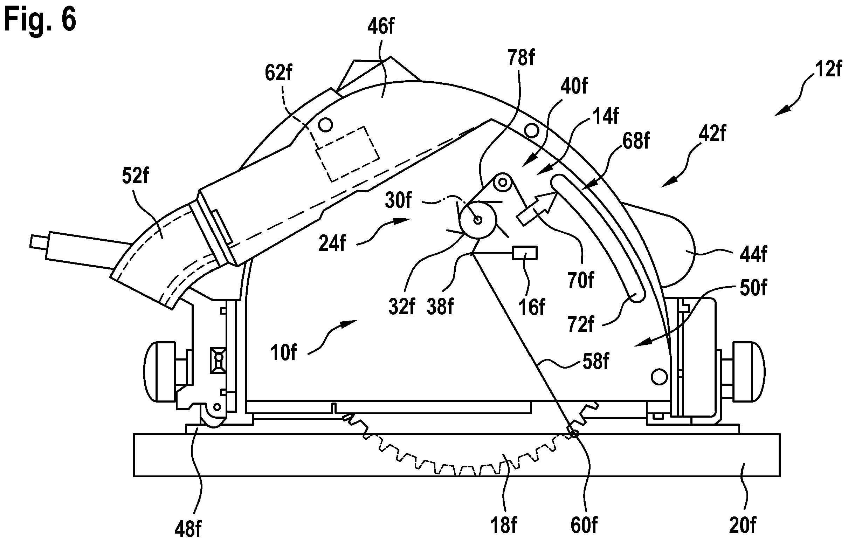

Figur 6 zeigt eine als Tauchkreissäge ausgebildete tragbare Werkzeugmaschine 12f, die eine Schnitttiefeneinstelleinheit 42f zu einer Einstellung einer Schnitttiefe eines Bearbeitungswerkzeugs 18f und eine weitere alternative Ausgestaltung einer Schnittlängenanzeigevorrichtung 10f umfasst.

Die Schnittlängenanzeigevorrichtung 10f weist eine Anzeigeeinheit 14f auf, welche eine Lichtquelle 16f umfasst und dazu vorgesehen ist, zumindest eine Position einer Schnittkante des Bearbeitungswerkzeugs 18f auf einem zu bearbeitenden Werkstück 20f in Abhängigkeit einer eingestellten Schnitttiefe eines Bearbeitungswerkzeugs 18f mittels eines Lichtstrahls 58f anzuzeigen. Die Lichtquelle 16f ist als Laserlichtquelle ausgebildet. Die Anzeigeeinheit 14f bildet in zumindest einem Betriebszustand zu einer Anzeige der Position der Schnittkante eine zumindest im Wesentlichen quer zu einer Schnittebene des Bearbeitungswerkzeugs 18f verlaufende Schnittkantenanzeigelinie 60f mittels des Lichtstrahls 58f auf dem zu bearbeitenden Werkstück 20f ab.

Die Anzeigeeinheit 14f weist eine Spiegeleinheit 24f auf, welche dazu vorgesehen ist, den Lichtstrahl 58f in Abhängigkeit der eingestellten Schnitttiefe des Bearbeitungswerkzeugs 18f umzulenken. Eine relative Lage zumindest eines Teils der Spiegeleinheit 24f zu der Lichtquelle 16f ist zu einer Veränderung eines Reflektionswinkels veränderbar. Die Spiegeleinheit 24f weist ein um eine Drehachse 30f drehbar gelagertes Spiegelelement 32f auf, welches dazu vorgesehen ist, den Lichtstrahl 22f auf das Werkstück 20f umzulenken. Das Spiegelelement 32f weist eine Mehrzahl von planaren Spiegelflächen 38f auf, welche in Umfangsrichtung an dem Spiegelelement 32f angeordnet sind. Ferner weist die Spiegeleinheit 24f einen Seilzug 40f auf, welcher dazu vorgesehen ist, das Spiegelelement 32f in Abhängigkeit der eingestellten Schnitttiefe des Bearbeitungswerkzeugs 18f in eine Drehbewegung zu versetzen.

Des Weiteren umfasst die Schnittlängenanzeigevorrichtung 10f eine Bewegungskopplungseinheit 68f, die das Spiegelelement 32f bewegungsabhängig mit dem Schnitttiefeneinstellelement 44f der Schnitttiefeneinstelleinheit 42f verbindet. Der Seilzug 40f ist mit einem Bewegungskopplungselement 70f der Bewegungskopplungseinheit 68f verbunden. Das Schnitttiefeneinstellelement 44f ist zu einer Einstellung einer Schnitttiefe des Bearbeitungswerkzeugs 18f beweglich an einem Führungsbahnelement 72f der Schnitttiefeneinstelleinheit 42f gelagert. Das Führungsbahnelement 72f ist an der Schutzeinheit 50f angeordnet. Bei einer Bewegung des Schnitttiefeneinstellelements 44f relativ zum Führungsbahnelement 72f wird das Bewegungskopplungselement 70f infolge der Verbindung mit dem Schnitttiefeneinstellelement 44f ebenfalls relativ zum Führungsbahnelement 72f entlang eines Verlaufs des Führungsbahnelements 72f bewegt, wodurch eine Bewegung eines Zugseils 78f des Seilzugs 40f erfolgt. Die Bewegung des Zugseils 78f bewirkt eine Drehbewegung des Spiegelelements 32f und eine daraus resultierende Veränderung des Reflektionswinkels des Lichtstrahls 22f in Richtung des Werkstücks 20f.

## Patentansprüche

1. Schnittlängenanzeigevorrichtung für eine insbesondere tragbare Werkzeugmaschine (12a; 12b; 12b; 12c; 12d; 12e; 12f), mit zumindest einer Anzeigeeinheit (14a; 14b; 14b; 14c; 14d; 14e; 14f), welche zumindest eine Lichtquelle (16a, 56a; 16b; 16c, 56c; 16d; 16e; 16f) aufweist und dazu vorgesehen ist, zumindest eine Position einer Schnittkante eines Bearbeitungswerkzeugs (18a; 18b; 18c; 18d; 18e; 18f) auf einem zu bearbeitenden Werkstück (20a; 20b; 20c; 20d; 20e; 20f) in Abhängigkeit einer eingestellten Schnitttiefe des Bearbeitungswerkzeugs (18a; 18b; 18c; 18d; 18e; 18f) mittels eines Lichtstrahls (22a, 58a; 22b, 58b; 22c, 58c; 22d, 58d; 22e; 58f) anzuzeigen, **dadurch gekennzeichnet, dass** die Anzeigeeinheit (14a; 14b; 14b; 14c; 14d; 14e; 14f) eine Spiegeleinheit (24a; 24b; 24c; 24d; 24e; 24f) aufweist, welche dazu vorgesehen ist, den Lichtstrahl (22a, 58a; 22b, 58b; 22c, 58c; 22d, 58d; 22e; 58f) in Abhängigkeit der eingestellten Schnitttiefe des Bearbeitungswerkzeugs (18a; 18b; 18c; 18d; 18e; 18f) umzulenken.

2. Schnittlängenanzeigevorrichtung nach Anspruch 1, **dadurch gekennzeichnet, dass** eine relative Lage zumindest eines Teils der Spiegeleinheit (24a; 24b; 24c; 24d; 24e; 24f) zur Lichtquelle (16a, 56a; 16b; 16c, 56c; 16d; 16e; 16f) zu einer Veränderung wenigstens eines Reflektionswinkels veränderbar ist.

3. Schnittlängenanzeigevorrichtung nach einem der vorhergehenden Ansprüche, **dadurch gekennzeichnet, dass** die Spiegeleinheit (24a; 24b; 24c; 24d) zumindest ein Konkavspiegelelement (26a, 64a; 26b, 64b; 26c, 64c; 26d, 64d) aufweist, welches dazu vorgesehen ist, den Lichtstrahl (22a, 58a; 22b, 58b; 22c, 58c; 22d, 58d) auf das Werkstück (20a; 20b; 20c; 20d) umzulenken.

4. Schnittlängenanzeigevorrichtung nach einem der vorhergehenden Ansprüche, **dadurch gekennzeichnet, dass** die Spiegeleinheit (24c; 24d) zumindest ein Konkavspiegelelement (26c, 64c; 26d, 64d) und zumindest ein Umlenkspiegelelement (28c, 74c; 28d, 74d) aufweist, welches dazu vorgesehen ist, den Lichtstrahl (22c, 58d; 22d, 58d) auf das Konkavspiegelelement (26c, 64c; 26d, 64d) umzulenken.

5. Schnittlängenanzeigevorrichtung nach Anspruch 4, **dadurch gekennzeichnet, dass** das Umlenkspiegelelement (28c, 74c; 28d, 74d) zu einer Veränderung zumindest eines Reflektionswinkels relativ zu dem Konkavspiegelelement (26c, 64c; 26d, 64d) verschiebbar ist.

6. Schnittlängenanzeigevorrichtung nach Anspruch 1 oder 2, **dadurch gekennzeichnet, dass** die Spiegeleinheit (24e; 24f) zumindest ein um eine Drehachse (30e; 30f) drehbar gelagertes Spiegelelement (32e; 32f) aufweist, welches dazu vorgesehen ist, den Lichtstrahl (22e; 58f) auf das Werkstück (20e; 20f) umzulenken.

7. Schnittlängenanzeigevorrichtung nach Anspruch 6, **dadurch gekennzeichnet, dass** das Spiegelelement (32e) an einer Außenkontur (34e) zumindest eine konvex gewölbte Spiegelfläche (36e) aufweist.

8. Schnittlängenanzeigevorrichtung nach Anspruch 6, **dadurch gekennzeichnet, dass** das Spiegelelement (32f) eine Mehrzahl von planaren Spiegelflächen (38f) aufweist, welche in Umfangsrichtung an dem Spiegelelement (32f) angeordnet sind.

9. Schnittlängenanzeigevorrichtung nach Anspruch 7, **dadurch gekennzeichnet, dass** die Spiegeleinheit (24e; 24f) zumindest einen Seilzug (40e; 40f) aufweist, welcher dazu vorgesehen ist, das Spiegelelement (32e; 32f) in Abhängigkeit der eingestellten Schnitttiefe des Bearbeitungswerkzeugs (18e; 18f) in eine Drehbewegung zu versetzen.

10. Werkzeugmaschine, insbesondere tragbare Werkzeugmaschine, insbesondere Kreissäge, mit zumindest einer Schnittlängenanzeigevorrichtung (10a; 10b; 10c; 10d; 10e; 10f) nach einem der vorhergehenden Ansprüche.

## Claims

1. Cutting length display apparatus for an in particular portable power tool (12a; 12b; 12b; 12c; 12d; 12e; 12f), having at least one display unit (14a; 14b; 14b; 14c; 14d; 14e; 14f), which has at least one light source (16a, 56a; 16b; 16c, 56c; 16d; 16e; 16f) and is provided for displaying at least one position of a cutting edge of a machining tool (18a; 18b; 18c; 18d; 18e; 18f) on a workpiece (20a; 20b; 20c; 20d; 20e; 20f) to be machined in dependence on a set cutting depth of the machining tool (18a; 18b; 18c; 18d; 18e; 18f) using a light beam (22a, 58a; 22b, 58b; 22c, 58c; 22d, 58d; 22e; 58f), **characterized in that** the display unit (14a; 14b; 14b; 14c; 14d; 14e; 14f) has a mirror unit (24a; 24b; 24c; 24d; 24e; 24f), which is provided for deflecting the light beam (22a, 58a; 22b, 58b; 22c, 58c; 22d, 58d; 22e; 58f) in dependence on the set cutting depth of the machining tool (18a; 18b; 18c; 18d; 18e; 18f).

2. Cutting length display apparatus according to Claim 1, **characterized in that** a relative pose of at least one part of the mirror unit (24a; 24b; 24c; 24d; 24e; 24f) with respect to the light source (16a, 56a; 16b; 16c, 56c; 16d; 16e; 16f) is changeable for changing at least one reflection angle.

3. Cutting length display apparatus according to one of the preceding claims, **characterized in that** the mirror unit (24a; 24b; 24c; 24d) has at least one concave mirror element (26a, 64a; 26b, 64b; 26c, 64c; 26d, 64d), which is provided for deflecting the light beam (22a, 58a; 22b, 58b; 22c, 58c; 22d, 58d) onto the workpiece (20a; 20b; 20c; 20d).

4. Cutting length display apparatus according to one of the preceding claims, **characterized in that** the mirror unit (24c; 24d) has at least one concave mirror element (26c, 64c; 26d, 64d) and at least one deflecting mirror element (28c, 74c; 28d, 74d), which is provided for deflecting the light beam (22c, 58d; 22d, 58d) onto the concave mirror element (26c, 64c; 26d, 64d).

5. Cutting length display apparatus according to Claim 4, **characterized in that** the deflecting mirror element (28c, 74c; 28d, 74d) is displaceable relative to the concave mirror element (26c, 64c; 26d, 64d) for changing at least one reflection angle.

6. Cutting length display apparatus according to Claim 1 or 2, **characterized in that** the mirror unit (24e; 24f) has at least one mirror element (32e; 32f) which is mounted rotatably about an axis of rotation (30e; 30f) and which is provided for deflecting the light beam (22e; 58f) onto the workpiece (20e; 20f).

7. Cutting length display apparatus according to Claim 6, **characterized in that** the mirror element (32e) has, on an outer contour (34e), at least one convexly curved mirror surface (36e).

8. Cutting length display apparatus according to Claim 6, **characterized in that** the mirror element (32f) has a plurality of planar mirror surfaces (38f), which are arranged on the mirror element (32f) in the circumferential direction.

9. Cutting length display apparatus according to Claim 7, **characterized in that** the mirror unit (24e; 24f) has at least one cable system (40e; 40f), which is provided for inducing a rotational movement of the mirror element (32e; 32f) in dependence on the set cutting depth of the machining tool (18e; 18f).

10. Power tool, in particular a portable power tool, in particular a circular saw, having at least one cutting length display apparatus (10a; 10b; 10c; 10d; 10e; 10f) according to one of the preceding claims.

## Revendications

1. Dispositif d'affichage de longueur de coupe destiné à une machine-outil notamment portable (12a ; 12b ; 12b ; 12c ; 12d ; 12e ; 12f), ledit dispositif comprenant au moins une unité d'affichage (14a ; 14b ; 14b ; 14c ; 14d ; 14e ; 14f) qui comporte au moins une source de lumière (16a, 56a ; 16b ; 16c, 56c ; 16d ; 16^{e}; 16f) et qui est destinée à afficher au moins une position d'une arête de coupe d'un outil d'usinage (18a ; 18b ; 18c ; 18d ; 18e ; 18f) sur une pièce (20a ; 20b ; 20c ; 20d ; 20e ; 20f) en fonction d'une profondeur de coupe définie de l'outil d'usinage (18a ; 18b ; 18c ; 18d ; 18e ; 18f) à l'aide d'un faisceau lumineux (22a, 58a ; 22b, 58b ; 22c, 58c ; 22d, 58d ; 22e ; 58f), **caractérisé en ce que** l'unité d'affichage (14a ; 14b ; 14b ; 14c ; 14d ; 14e ; 14f) comprend une unité à miroir (24a ; 24b ; 24c ; 24d ; 24e ; 24f) qui est destinée à dévier le faisceau lumineux (22a, 58a ; 22b, 58b ; 22c, 58c ; 22d, 58d ; 22e ; 58f) en fonction de la profondeur de coupe réglée de l'outil d'usinage (18a ; 18b ; 18c ; 18d ; 18e ; 18f) .

2. Dispositif d'affichage de longueur de coupe selon la revendication 1, **caractérisé en ce qu'**une position relative d'au moins une partie de l'unité à miroir (24a ; 24b ; 24c ; 24d ; 24e ; 24f) de la source de lumière (16a, 56a ; 16b ; 16c, 56c ; 16d ; 16e ; 16f) peut être modifiée pour modifier au moins un angle de réflexion.

3. Dispositif d'affichage de longueur de coupe selon l'une des revendications précédentes, **caractérisé en ce que** l'unité à miroir (24a ; 24b ; 24c ; 24d) comporte au moins un élément formant miroir concave (26a, 64a ; 26b, 64b ; 26c, 64c ; 26d, 64d) qui est destiné à dévier le faisceau lumineux (22a, 58a ; 22b, 58b ; 22c, 58c ; 22d, 58d) vers la pièce (20a ; 20b ; 20c ; 20d).

4. Dispositif d'affichage de longueur de coupe selon l'une des revendications précédentes, **caractérisé en ce que** l'unité à miroir (24c ; 24d) comporte au moins un élément formant miroir concave (26c, 64c ; 26d, 64d) et au moins un élément formant miroir de déviation (28c, 74c ; 28d, 74d) qui est destiné à dévier le faisceau lumineux (22c, 58d ; 22d, 58d) vers l'élément formant miroir concave (26c, 64c ; 26d, 64d).

5. Dispositif d'affichage de longueur de coupe selon la revendication 4, **caractérisé en ce que** l'élément formant miroir de déviation (28c, 74c ; 28d, 74d) peut coulisser par rapport à l'élément formant miroir concave (26c, 64c ; 26d, 64d) pour modifier au moins un angle de réflexion.

6. Dispositif d'affichage de longueur de coupe selon la revendication 1 ou 2, **caractérisé en ce que** l'unité à miroir (24e ; 24f) comporte au moins un élément formant miroir (32e ; 32f) monté à rotation sur un axe de rotation (30e ; 30f) et destiné à dévier le faisceau lumineux (22e ; 58f) vers la pièce (20e, 20f).

7. Dispositif d'affichage de longueur de coupe selon la revendication 6, **caractérisé en ce que** l'élément formant miroir (32e) comporte sur un contour extérieur (34e) au moins une surface de miroir (36e) incurvée de manière convexe.

8. Dispositif d'affichage de longueur de coupe selon la revendication 6, **caractérisé en ce que** l'élément formant miroir (32f) comporte une pluralité de surfaces de miroir planes (38f) qui sont disposées dans la direction périphérique sur l'élément formant miroir (32f).

9. Dispositif d'affichage de longueur de coupe selon la revendication 7, **caractérisé en ce que** l'unité à miroir (24e ; 24f) comporte au moins un câble de traction (40e ; 40f) qui est destiné à déplacer l'élément formant miroir (32e ; 32f) suivant un mouvement de rotation en fonction de la profondeur de coupe réglée de l'outil d'usinage (18e ; 18f).

10. Machine-outil, en particulier machine-outil portable, en particulier scie circulaire, comprenant au moins un dispositif d'affichage de longueur de coupe (10a ; 10b ; 10c ; 10d ; 10e ; 10f) selon l'une des revendications précédentes.
